# EUROPÄISCHE PATENTSCHRIFT

(11) **EP 0 358 868 B1**
(45) Veröffentlichungstag und Bekanntmachung des Hinweises auf die Patenterteilung: **04.05.1994**
(21) Anmeldenummer: 89111605.5
(22) Anmeldetag: 26.06.1989
(51) Int. Cl.: G02B 5/08

(54) **Verfahren zur Herstellung eines Tripelspiegelrades**
Method for production of a triple-mirror wheel
Méthode pour la fabrication d'une roue à miroir triple

(30) Priorität: 12.09.1988 DE 3830926
(43) Veröffentlichungstag der Anmeldung: 21.03.1990
(73) Patentinhaber: Menke, Josef-Ferdinand, Dipl.-Ing., D-24960 Glücksburg (DE)
(72) Erfinder: Menke, Josef-Ferdinand, Dipl.-Ing., D-24960 Glücksburg (DE)
(74) Vertreter: Riecke, Manfred

(56) Entgegenhaltungen:
- DE-A- 2 713 547
- DE-A- 3 231 239
- GB-A- 2 045 965

## Beschreibung

Die Erfindung betrifft ein Verfahren zur Herstellung eines Tripelspiegelrades, d.h. eines optisch-mechanischen Bauelementes, bei dem auf einem Radumfang Tripelspiegel nebeneinander abwechselnd um 180° versetzt angeordnet sind. Ein solches Bauelement ist beschrieben in der Anmeldung P 37 08 883.1

Die Herstellung eines solchen Tripelspiegelrades ist schwierig. Das Rad ist nur dann optisch brauchbar, wenn die drei Flächen der einzelnen Tripelspiegel absolut scharf aufeinanderstoßen. Ist dies nicht der Fall, sondern zeigen die drei Kanten, entlang derer die Flächen aufeinandertreffen, irgendwelche Abrundungen, so tritt beim Übergang der Strahlen von der einen auf die benachbarte Fläche, ein Strahlenausfall auf, der umso größer ist, je größer der Kantenradius ist.

Der Erfindung liegt daher die Aufgabe zugrunde, ein Verfahren anzugeben, mit dem ein Tripelspiegelrad mit scharfen Kanten der einzelnen Tripelspiegel herstellbar ist.

Diese Aufgabe ist durch ein Verfahren gelöst, das die im Anspruch angegebenen Verfahrensschritte aufweist.

In der Zeichnung ist die Erfindung in einem Ausführungsbeispiel dargestellt. Es zeigen:
- Fig. 1: den Kern eines Tripelspiegelrades in Ansicht,
- Fig. 2: einen Polygonalring in perspektvischer Ansicht,
- Fig. 3: den Kern des Tripelspiegelrades und zwei Polygonalringe auf einer Welle in halbmontiertem Zustand,
- Fig. 4: ein Tripelspiegelrad in vollmontiertem Zustand auf einer Welle.

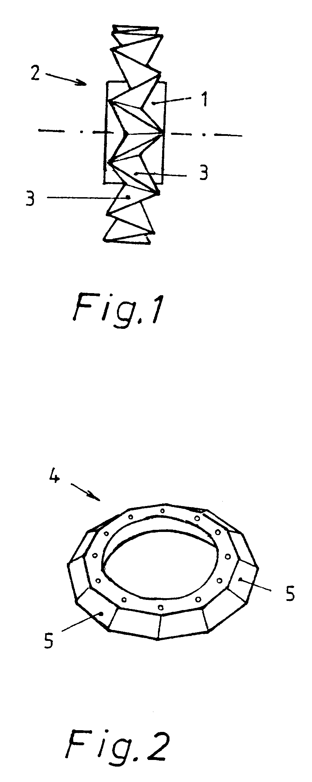

In Fig.1 ist mit 1 die Nabe des Kernes 2 des Tripelspiegelrades bezeichnet. Auf dieser Nabe sind um 180° gedrehte Dachkanten angeordnet, die jeweils zu einer Seite 3 benachbart sind. Die Kanten zwischen diesen Seiten 3, d.h. die Dachkanten, sind dabei extrem scharf herstellbar, da zu dieser Konfiguration von allen Seiten her ein freier Zugang mit einem geeigneten Werkzeug, z.B. mit einem Fräser, möglich ist.

Fig.2 zeigt einen Polygonalring 4, der glatte Polygonalflächen 5 auf weist, die maßlich mit den am Kern 2 der Fig.1 fehlenden dritten Seiten der einzelnen zu bildenden Tripelspiegel übereinstimmen. Diese Polygonalflächen sind ebenfalls extrem genau plan herstellbar.

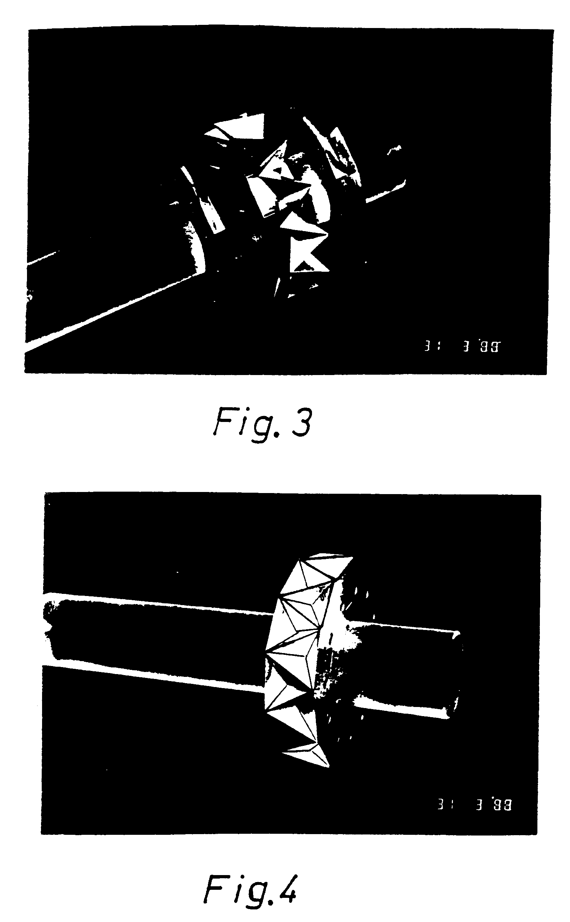

Fig.3 zeigt die beschriebenen Einzelteile auf einer Welle 6 aufgeschoben in teilmontiertem Zustand. Der Kern 2 ist dabei zwischen zwei Polygonalringen 4 angeordnet. Fig.4 zeigt die Einzelteile dann komplett montiert, d.h. die beiden Polygonalringe 4 sind mit dem Kern 2 fest verbunden, z.B. verschraubt.

Wie erkennbar, ist durch dieses Verfahren ein Tripelspiegelrad mit jeweils um 180° gedrehten Tripelspiegeln mit extrem scharfen Kanten herstellbar. Die eine Kante jedes Tripelspigels, oben als Dachkante bezeichnet, ist, wie schon erwähnt, durch den freien Zugang mit einem Werkzeug am Kern 2 scharf herstellbar, während die beiden anderen Kanten jedes Tripelspiegels von den Flächen des Polygonalringes gebildet werden, auf denen die Außenkanten des Kernes 2 plan und ohne jede Krümmung aufliegen.

## Patentansprüche

1. Verfahren zur Herstellung eines Tripelspiegelrades bestehend aus einem Rad, an dessen äußerem Umfangsrand nach außen gerichtete Tripelspiegel angeordnet sind, wobei die Tripelspiegel über den Radumfang unmittelbar nebeneinander so angeordnet sind, daß eine der drei spiegelnden Flächen eines Tripelspiegels mit einer der spiegelnden Flächen des einen benachbarten Tripelspiegels eine gemeinsame Kante bildet und eine andere der drei spiegelden Flächen des einen Tripelspiegels mit einer der spiegelden Flächen des anderen benachbarten Tripelspiegels eine weitere gemeinsame Kante bildet, so daß jeder Tripelspiegel mit jedem seiner beiden benachbarten Tripelspiegel eine gemeinsame Kante hat;
wobei das Verfahren aus den folgenden Schritten besteht:
Herstellung eines Mittelteils (2), das aus einer ringförmigen Nabe (1) besteht, auf deren Außenumfang nach außen gerichtete Dachkantspiegel so angeordnet werden, daß sie die gemeinsamen Kanten des Tripelspiegelrades und damit zwei von den drei spiegelden Flächen jedes Tripelspiegels bilden;
Herstellung zweier identischer Polygonalspiegelringe (4) mit Polygonalspiegelflächen (5), die in maßlicher Übereinstimmung mit den Dachkanten des Mittelteils (2) die jeweils dritte Spiegelfläche der einzelnen Tripelspiegel bilden;
Montage der Polygonalspiegelringe (4) auf dem Mittelteil (2), wobei das Mittelteil (2) zwischen den beiden Polygonalspiegelringen (4) derart angeordnet und mit den Polygonalspiegelringen fest verbunden wird, daß das Tripelspiegelrad gebildet wird.

## Claims

1. Method of manufacturing a triple mirror drum consisting of a drum, at the outer circumference of which are arranged outwardly directed triple mirrors, wherein the triple mirrors are so arranged directly alongside one another over the drum circumference that one of the three reflective surfaces of one triple mirror forms a common edge with one of the reflective surfaces at one adjacent triple mirror and another one of the three reflective surfaces of the one triple mirror forms a further common edge with one of the reflective surfaces of the other adjacent triple mirror, so that each triple mirror has a common edge with each of its two adjacent triple mirrors;
wherein the method consists of the following steps:
manufacture of a middle part (2), which consists of an annular hub on the outer circumference of which outwardly directed pentamirrors are so arranged that they form the common edges of the triple mirror drum and thus two of the three reflective surfaces of each triple mirror;
manufacture of two identical polygonal reflector rings (4) with polygonal reflective surfaces (5) which form, in proportional correspondence with the ridge edges of the middle part (2), the respective third reflective surface of the individual triple mirrors;
mounting of the polygonal reflector rings (4) on the middle part (2), wherein the middle part (2) is arranged between the two polygonal reflector rings (4) in such a manner, and fixedly connected with the polygonal reflector rings, that the triple mirror drum is formed.

## Revendications

1. Procédé pour la fabrication d'une roue de miroir triple constituée par une roue, sur la périphérie la plus externe de laquelle sont disposés des miroirs triples orientés vers l'extérieur, lesdits miroirs triples étant disposés directement sur la périphérie de la roue les uns à côté des autres de telle manière que l'une des trois faces réfléchissantes de chaque miroir triple forme avec l'une des faces réfléchissantes de l'un des miroirs triples voisin une arête commune et qu'une autre des trois faces réfléchissantes de ce premier miroir triple forme avec l'une des faces réfléchissantes de l'autre miroir triple voisin une autre arête commune, de sorte que chaque miroir triple possède avec chacun des deux miroirs triples voisins de part et d'autre une arête commune ;
le procédé comportant alors les étapes suivantes :
- fabrication d'une partie centrale (2) qui est constituée par un moyeu (1) en forme d'anneau sur la périphérie externe duquel des miroirs prismatiques orientés vers l'extérieur sont disposés de telle manière qu'ils forment les arêtes communes de la roue à miroir triple ainsi que deux des trois faces réfléchissantes de chaque miroir triple ;
- fabrication de deux anneaux miroirs polygonaux (4) identiques avec des surfaces réfléchissantes polygonales (5) qui forment la troisième surface réfléchissante respective des miroirs triples individuels en étant en correspondance dimentionnelle avec les arêtes prismatiques de la partie centrale (2) ;
- montage des anneaux miroirs polygonaux (4) sur la partie centrale (2), ladite partie centrale (2) étant disposée entre les deux anneaux miroirs polygonaux (4) et rendue solidaire desdits anneaux polygonaux de telle manière qu'il se forme la roue à miroir triple.
